# EUROPÄISCHE PATENTSCHRIFT

(11) **EP 2 106 313 B1**
(45) Veröffentlichungstag und Bekanntmachung des Hinweises auf die Patenterteilung: **01.06.2011**
(21) Anmeldenummer: 07846294.2
(22) Anmeldetag: 07.11.2007
(51) Int. Cl.: B23B 29/034, B23D 21/14

(54) **WERKZEUGKOPF FÜR EINE ROHRSCHNEIDEMASCHINE**
TOOL HEAD FOR A PIPE-CUTTING MACHINE
TÊTE D'OUTIL POUR UNE MACHINE COUPE-TUBES

(30) Priorität: 22.11.2006 DE 102006055417
(43) Veröffentlichungstag der Anmeldung: 07.10.2009
(73) Patentinhaber: Rattunde & Co GmbH, 19288 Ludwigslust (DE)
(72) Erfinder: RATTUNDE, Ulrich, 19322 Bentwisch (DE)
(74) Vertreter: Groth, Wieland
(86) Internationale Anmeldenummer: PCT/DE2007/002004
(87) Internationale Veröffentlichungsnummer: WO 2008/061494

(56) Entgegenhaltungen:
- DE-A1- 19 951 658

## Beschreibung

Die Erfindung betrifft einen Werkzeugkopf, eine Maschine zur Bearbeitung der Enden eines stangenförmigen Profilmaterials, sowie ein Verfahren zur Bearbeitung der Enden eines stangenförmigen Profilmaterials.

Rohrschneidemaschinen und für sie bestimmte Werkzeugköpfe sind im Stand der Technik bekannt. Herkömmliche Rohrschneidemaschinen weisen einen Werkzeugkopf mit einer oder mehreren Schneiden auf und eine Spannvorrichtung für ein zu bearbeitendes Rohr, das in Längsrichtung direkt vor dem rotierbaren Werkzeug gegenüber der Maschine positionsfest angeordnet wird. Der Werkzeugkopf wird in Rotationsbewegung gesetzt und in Längsrichtung gegen die Stirnfläche des Rohres verfahren. Durch entsprechende Anordnung der Schneiden können damit Innen- und Außenfasen an die Rohrwandung angebracht werden, sowie die Stirnfläche des Rohres bearbeitet werden.

Aus der DE 199 51658 A1 ist ein Werkzeughafter gemäß dem Oberlegriff von Auspruch 1 für den Einsatz in Werkzeugmaschinen beschrieben, bei dem axial verschiebbare Steuerstangen und Kopplungsmittel radial verstellbare, jeweils eine Schneidplatte haltende Schneidhalter aufweisen, mit deren Hilfe es möglich ist, Einstiche in Oberflächen einzubringen.

Nachteilig an dem beschriebenen Werkzeughalter ist dessen nicht zufriedenstellende Präzision.

Nachteilig an den beschriebenen Rohrschneidernaschinen ist die Tatsache, dass die Schneidwerkzeuge nicht steuerbar in radialer Richtung verfahrbar sind. Somit ist es insbesondere nicht möglich, Nuten, Aussparungen und Ähnliches hinter der Stirnfläche in die Rohrinnen- oder Rohraußenwandung einzubringen.

Es ist Aufgabe der vorliegenden Erfindung, einen eingangs genannten Werkzeugkopf, eine eingangs genannte Maschine und ein Verfahren zur Bearbeitung von Enden eines stangenförmigen Profilmaterials zur Verfügung zu stellen.

Hinsichtlich des Werkzeugkopfes wird die genannte Aufgabe mit einem Werkzeugkopf mit Merkmalen des Anspruchs 1 erfüllt.

Unter Hinterdrehungen werden hier insbesondere radial um das stangenförmige Profilmaterial innen- oder/oder außenwandig umlaufende Nuten, Aussparungen, Konturenu. ä. verstanden. Diese Aussparungen, Nuten können entlang des radialen Umfanges Veränderungen aufweisen, so können die Nuten entlang des Umfanges eine veränderliche Tiefe, Breite oder ein in einem Querschnitt entlang der Längsrichtung unterschiedliches Profil aufweisen. Hinterdrehungen können von der Stimfläche des Profilmaterials an jeder Stelle beabstandet sein, dazu wird Material von der entsprechenden Materialwandung innen- oder außenseitig abgetragen, ohne dass dabei aber Profilmaterial zwischen der Stirnseite und dem abzutragenden Bereich entfernt wird. Insbesondere können radial umlaufende Nuten, die um einen bestimmten Abstand von der Stimfläche des Materials beabstandet sind, in die Materialinnen- und /oder Außenwandung eingebracht werden.

Der erfindungsgemäße Werkzeugkopf weist dazu ein Gehäuse auf, in dem wenigstens ein Schubkeil vorgesehen ist, der in einer ersten Zahnführung in Längsrichtung hin und her beweglich angeordnet ist. Die erste Zahnführung weist zwei miteinander korrespondierende und ineinander in Längsrichtung hin und her gleitende Zahnprofile auf. Ein erstes Zahnprofil ist auf eine Außenwandung des Schubkeils aufgebracht, während ein korrespondierendes erstes Zahnprofil auf einer Innenwandung der zugeordneten Schubkeilsführung in einem Gehäuse vorgesehen ist. Die Zahnführung erzeugt eine vergrößerte Kontaktfläche zwischen Schubkeil und Gehäuse. Somit entsteht gegenüber einer glatten T-Führung oder Schwalbenschwanz-Führung eine deutlich verbesserte Führung, deutlich erhöhter Güte, verbesserter Wiederholgenauigkeit und Präzision.

Jedem der Schubkeile ist ein in jeweils einer zweiten Zahnführung ein in einer quer zur Längsrichtung angeordneten Richtung beweglicher Support im Gehäuse zugeordnet. Hinsichtlich der zweiten Zahnführung des Supports gilt sinngemäß das Gleiche wie bei der ersten Zahnführung des Schubkeils. Das außenwandig am Support angebrachte zweite Zahnprofil wirkt mit einem in einer im Gehäuse eingelassenen Schubkeilführung innenwandig aufgebrachten korrespondierenden zweiten Zahnprofil zusammen. Aufgrund der Vergrößerung der Kontaktfläche entsteht auch hier eine Zahnführung mit hoher Güte. Der Schubkeil und der zugeordnete Support stehen über eine schräge Kontaktfläche miteinander gleitend in Berührung und eine Bewegung des Schubkeils in Längsrichtung wird über die schräge Kontaktfläche in eine Querbewegung des zugeordneten Supports umgewandelt. Die schräge Kontaktfläche ist vorzugsweise über ihre gesamte Ausdehnung glatt und mit gleich bleibender Steigung ausgeformt.

Zur weiteren Erhöhung der Führungsgenauigkeit und Güte der zweiten Zahnführung weist der Support einen in Querrichtung verlaufenden Supportarm auf. Vorzugsweise verläuft die Querrichtung senkrecht zur Längsrichtung und in radialer Richtung des Schneidwerkzeugs.

Am Support ist ein Schneidwerkzeug, vorzugsweise an einer Befestigungsplatte, befestigbar. Vorteilhafterweise ist das am Support befestigte Schneidwerkzeug so in radialer Richtung beweglich.

Während des Betriebs ist der Werkzeugkopf in schneller Rotationsbewegung um die Längsachse. Der erfindungsgemäße Werkzeugkopf ermöglicht es, die Schneidwerkzeuge auch während der Rotationsbewegung radial gesteuert zu verstellen. Dazu ist der Werkzeugkopf auf eine Drehdurchführung montiert, die drei nebeneinander in Längsrichtung angeordnete Schiebestangen aufweist. Die Enden der Schiebestangen können die Schubkeile berühren und eine Wirkverbindung mit ihnen ausbilden. Vorzugsweise wird eine Schubkraft durch die Schubstange auf den zugeordneten Schubkeil übertragen.

Vorzugsweise ist dem wenigstens einen Schubkeil und dem wenigstens einen Support jeweils-eine Rückstellfeder zugeordnet Der Schubkeil ist durch Schubkraft auf einen aus dem Werkzeugkopf entgegen der Längsrichtung heraus ragenden Schubkeilarm an einer Stirnseite des Werkzeugkopfes in den Werkzeugkopf hinein drückbar, während der gleiche Schubkeil durch die Rückstellfeder automatisch entgegen der Längsrichtung zurückgesetzt wird.

Durch die schräge Kontaktfläche wird die Längsbewegung des Schubkeils in eine Querbewegung des Supports umgelenkt. Durch Druck des Schubkeils wird der Support nach radial innen bewegt, während bei Entlastung der Schubkeil aufgrund der ihm zugeordneten Rückstellfeder nach radial außen bewegt wird. Durch gesteuerte Schubkraft auf den Schubkeilarm ist eine entsprechend gesteuerte Querbewegung des zugehörigen Schneidwerkzeugs möglich.

Das Schneidwerkzeug ermöglicht es, beispielsweise radiale Hinterdrehungen auf eine Außenwandung eines stangenförmigen, im Querschnitt kreisförmigen Profilmaterials einzubringen. Dazu werden die Schneidwerkzeuge zunächst radial nach außen verfahren, der Werkzeugkopf in Rotationsbewegung gesetzt und dann in Längsrichtung zur Stirnfläche des stangenförmigen Profilmaterials hin verfahren, so weit, dass die Schneidwerkzeuge das Ende des stangenförmigen Profilmaterials hinterlaufen. Erst jetzt wird durch gesteuerte Druckkraft auf den wenigstens einen Schubkeilarm das Schneidwerkzeug gesteuert nach innen verfahren und damit eine von der Stirnfläche des Profilmaterials beabstandete Hinterdrehung in die Außenwandung eingebracht.

Darüber hinaus ist es möglich, radiale Hinterdrehungen in eine Innenwandung eines kreisförmigen Materialendes einzubringen, indem die Schneidwerkzeuge zunächst radial nach innen verfahren werden, dann durch Längsverfahren des Werkzeugkopfes in das Innere des Materials eingeführt werden und in Rotationsbewegung gesetzt werden. Erst jetzt werden die Schneidwerkzeuge durch Entlasten der Schubkeilarme nach radial außen bewegt und ermöglichen es damit, eine radiale Hinterdrehung innenwandig in das Material einzubringen.

In einer besonders bevorzugten Ausführungsform der Erfindung ist eine Mehrzahl von Supports in einem Querschnitt senkrecht zur Längsrichtung sternförmig vorgesehen und jeder Support weist einen ihm zugeordneten quer verlaufenden Supportarm auf. Dabei sind die Supportarme in einer Ansicht in Längsrichtung sich kreuzend angeordnet. Diese Ausführungsform der Erfindung ermöglicht es, auf Platz sparende Weise und trotzdem bei hoher Führungsgenauigkeit eine Mehrzahl, vorzugsweise genau drei Supporte, in dem Werkzeugkopf unterzubringen. Durch die gekreuzte Anordnung der Supportarme, die vorzugsweise entlang ihrer Außenfläche auch mit einem korrespondierenden zweiten Zahnprofil entlang ihrer Querbewegungsrichtung versehen sind, behält der Support eine hohe Führungsgüte und Wiederholgenauigkeit.

Günstigerweise ist das Gehäuse in einem Querschnitt senkrecht zur Längsrichtung im Wesentlichen kreisförmig ausgebildet, und der wenigstens eine Schubkeil weist an sich einander am Schubkeil gegenüberliegenden, radial verlaufenden Außenwandungen ein erstes äußeres Zahnprofil auf, das mit einem ersten inneren Zahnprofil an einer Innenwandung der Schubkeilführung als erste Zahnführung zusammenwirkt.

Günstigenfalls sind genau die radialen Außenwandungen eines im Querschnitt senkrecht zur Längsrichtung rechteckigen Schubkeils mit einem in Längsrichtung verlaufenden ersten äußeren Zahnprofil versehen. Das korrespondierend erste innere Zahnprofil ist auf die Innenwandung der Schubkeilfführung im Gehäuse aufgebracht.

Alle Zahnprofile werden in besonders exakter Weise durch Drahterodieren hergestellt. Das Drahterodieren macht es notwendig, dass sich die Zahnprofile über die gesamte Ausdehnung der zugeordneten Führungen des Bauteils erstrecken.

In einer weiteren bevorzugten Ausführungsform der Erfindung weist der wenigstens eine Support an einander gegenüberliegenden radial verlaufenden Wandungen jeweils ein zweites äußeres Zahnprofil auf, das mit einem zweiten inneren Zahnprofil an einer Innenwandung der Supportführung zur zweiten Zahnführung zusammenwirkt. Die zweite Zahnführung ist vorzugsweise senkrecht zur Längsrichtung radial durch das Gehäuse hindurch geführt. Das äußere zweite Zahnprofil erstreckt sich günstigerweise über die gesamte radiale Ausdehnung des Supportarmes. Durch die zusätzlich zweite Zahnführung des Supportes wird eine besonders hohe Führungsgenauigkeit und -güte erreicht.

Vorzugsweise weist der wenigstens eine Schubkeil eine konstante Bauhöhe auf. Unter Bauhöhe wird hier die Ausdehnung des Schubkeils senkrecht zur Längsrichtung und senkrecht zum Radius des Werkzeugkopfes verstanden. Zur Kostenersparnis sind die Schubkeile baugleich.

In einer weiteren günstigen Ausführungsform der Erfindung weist der im Gehäuse vorgesehene Teil des wenigstens einen Supports ebenfalls eine konstante Bauhöhen entlang seiner gesamten Ausdehnung auf.

Vorteilhafterweise ragt der Schubkeil während des Betriebs zeitweise in die Supportführung hinein. Dazu ist die Bauhöhe des Schubkeils um die Zahntiefe des zweiten Zahnprofils kleiner als die Bauhöhe des Supports.

Support und Schubkeil sind in einer kostengünstigen Ausführungsform der Erfindung durch entsprechend dimensionierte Rückstellfedern automatisch rückstellbar.

Hinsichtlich der Maschine zur Bearbeitung der Enden eines stangenförmigen Profilmaterials wird die gestellte Aufgabe durch eine Maschine mit einen oben beschriebenen Werkzeugkopf gelöst Eine Maschine, die eine entsprechende Steuerung des Werkzeugkopfes ermöglicht, weist beispielsweise eine Drehdurchführung auf.

Hinsichtlich des Verfahrens wird die Aufgabe durch ein Verfahren zur Bearbeitung von Enden eines stangenförmigen Profilmaterials gelöst, indem eine radiale Hinterdrehung in eine Wandung des Profilmaterials eingebracht wird. Ein derartiges Verfahren ist durch einen oben beschriebenen Werkzeugkopf und eine oben beschriebenen Maschine ausführbar.

Vorzugsweise wird der wenigstens eine Support zur Bearbeitung einer Profilmaterialaußenwandung zunächst nach radial außen oder zur Bearbeitung einer Profilamterialinnenwandung zunächst nach radial innen verfahren. Dadurch ist es möglich, das Schneidwerkzeug in Längsrichtung des Profilmaterial berührungsfrei hinter eine Stimfläche des Profilmaterial zu führen, das Schneidwerkzeug dann relativ zum Profilmaterial um eine in Längsrichtung ausgerichtete Längsachse zu rotieren und das Schneidwerkzeug während der Rotation radial zur Wandung hin zu verstellen, bis die Wandung vom Schneidwerkzeug berührt wird und durch die Berührung eine Hinterdrehung in die Wandung einzubringen.

Die Erfindung wird anhand eines Ausführungsbeispieles in sieben Figuren beispielhaft beschrieben. Dabei zeigen:
- Fig. 1: eine perspektivische Ansicht des erfindungsgemäßen Werkzeugkopfes,
- Fig. 2: eine zweite perspektivische Ansicht des erfindungsgemäßen Werkzeugkopfes,
- Fig. 3: eine Ansicht gemäß Fig. 1 mit abgenommenem Gehäuse,
- Fig. 5: eine prinzipielle Ansicht des Werkzeugkopfes ohne Gehäuse,

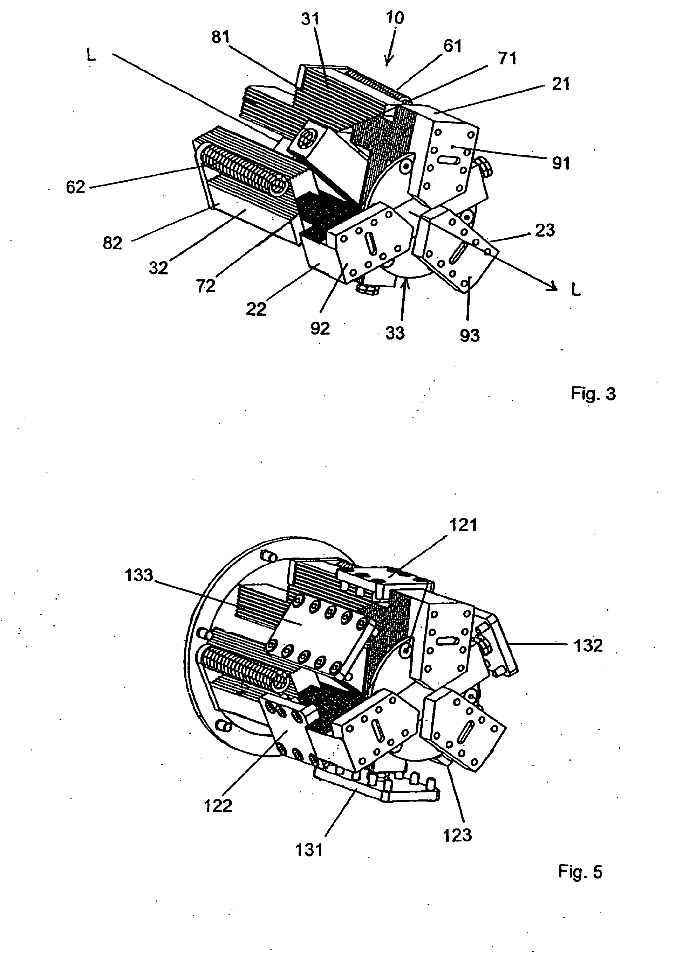

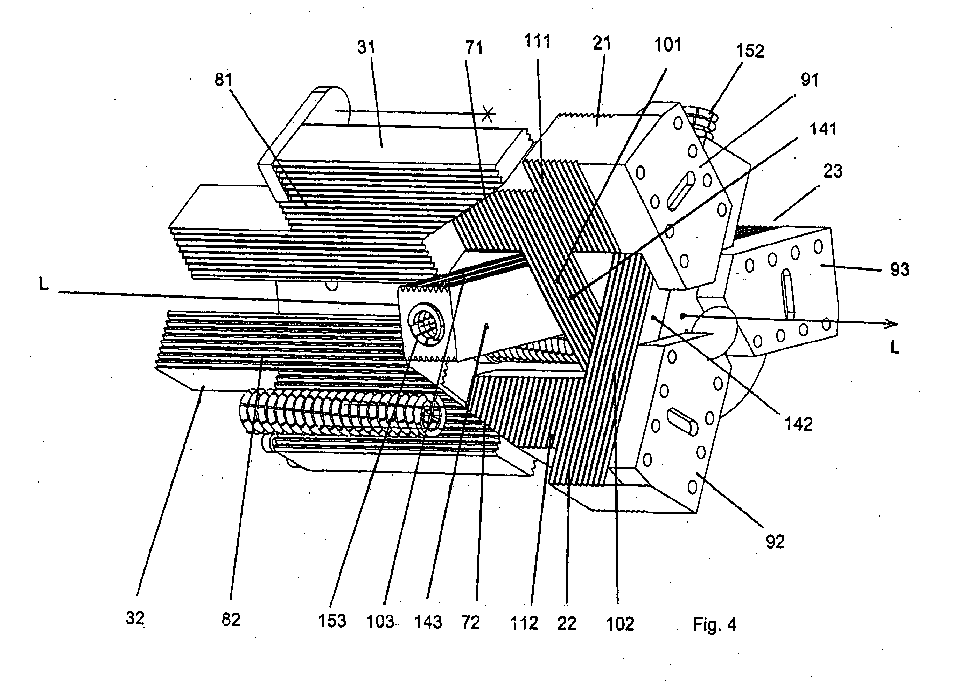

- Fig. 4: eine Ansicht gemäß Fig. 3 mit Halteplatten,

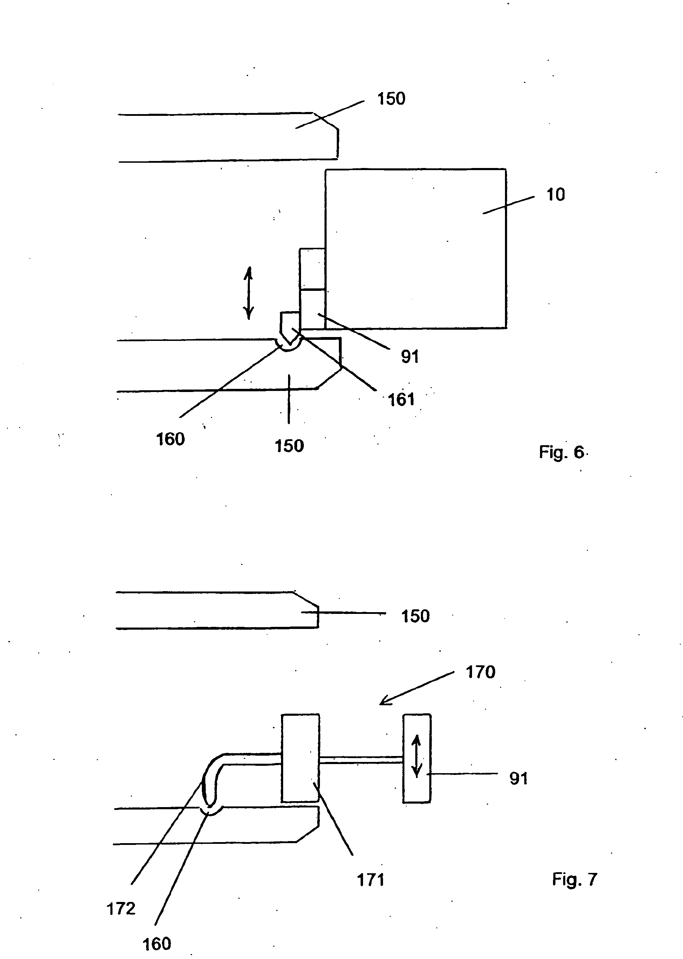

- Fig. 6: einen Werkzeugkopf mit Schneide,
- Fig. 7: einen Werkzeugkopf mit erfindungsgemäßem Stechmeißel.

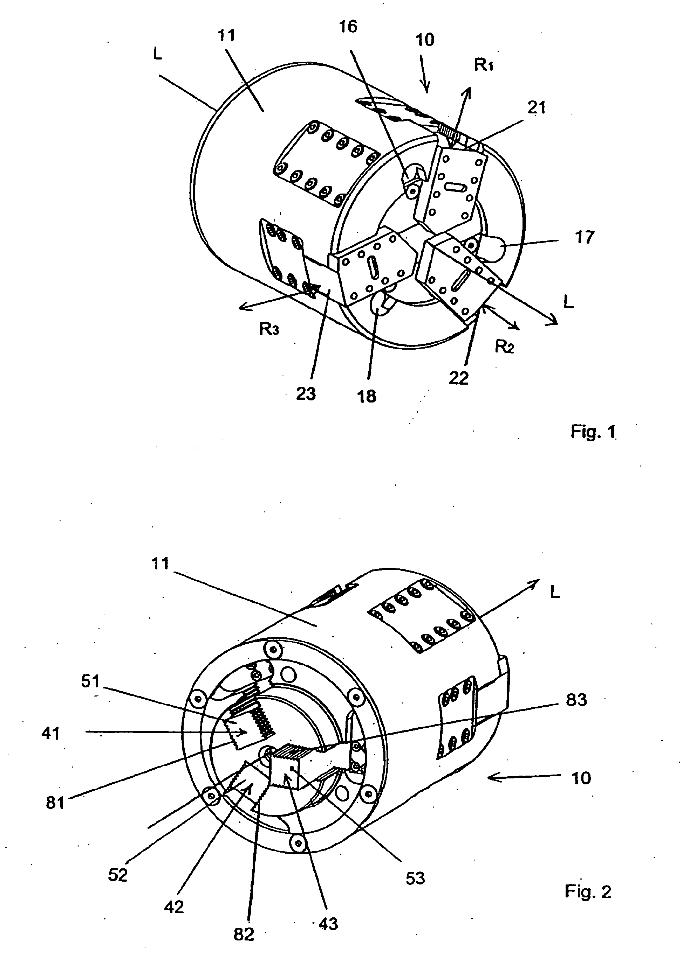

Der in Fig. 1 dargestellte Werkzeugkopf 10 weist ein im Querschnitt senkrecht zu einer Längsrichtung L im Wesentlichen kreisförmig ausgebildetes Gehäuse 11 auf. Der Werkzeugkopf 10 ist im Betrieb um eine in Längsrichtung L ausgerichtete zentral durch den Werkzeugkopf 10 hindurch geführte Rotationsachse in einer Maschine zum Ablängen von Stücken eines stangenförmigen Profilmaterials, insbesondere einer Rohrschneidemaschine, drehbar gelagert und wird um diese Achse mit bis zu 1000 Umdrehungen pro Minute angetrieben. Der Werkzeugkopf 10 weist drei radial bewegliche Supporte 21, 22, 23 auf. Die drei Radialrichtungen R1, R2, R3 sind in einem Winkel von 120° zueinander und senkrecht zur Längsrichtung L angeordnet. Im Betrieb ist außen auf jedem Support 21, 22, 23 jeweils ein (nicht eingezeichnetes) Schneidwerkzeug ihm gegenüber positionsfest montiert. Die Verstelllänge jedes Supports 21, 22, 23 beträgt etwa 10 mm entlang der zugehörigen Radiatrichtung R1, R2, R3. Der Werkzeugkopf wird im Betrieb durch eine Drehdurchführung der Rohrschneidemaschine NC-gesteuert.

Der in Fig. 1 gezeigte Werkzeugkopf 10 ist dazu bestimmt, die Enden von metallischen Profilen, insbesondere Rohren oder kreisförmigen Vollprofilen, mit den (nicht eingezeichneten) Schneidwerkzeugen zu bearbeiten. Die Schneidwerkzeuge sind austauschbar montiert, und sie können unterschiedlich sein. Der Werkzeugkopf 10 weist drei in Längsrichtung L durch den Werkzeugkopf 10 durchgeführte Bohrungen 16, 17, 18 für Schrauben zur Befestigung an einer den Werkzeugkopf antreibenden Drehdurchführung auf.

Fig. 2 zeigt den Werkzeugkopf 10 gemäß Fig. 1 in einer Rückansicht. Im Betrieb ist das zu bearbeitende Rohr in Längsrichtung L konzentrisch zum Werkzeugkopf 10 angeordnet, so dass die drei (nicht eingezeichneten) Schneidwerkzeuge das Rohrende bearbeiten können. Dazu wird der Werkzeugkopf 10 in Längsrichtung L in Richtung des vor dem Werkzeugkopf 10 eingespannten Rohrendes verschoben und die drei Schneidwerkzeuge nehmen durch Rotationsbewegung vorgegebene Bearbeitungen am Rohrende vor.

Die in Fig. 2 gezeigte Rückansicht zeigt drei Schubkeillarme 41, 42, 43 von drei jeweils in Längsrichtung L im Gehäuse 11 hin und her verschiebbar angeordneten Schubkeilen 31, 32, 33. Der Werkzeugkopf 10 wird über eine (nicht eingezeichnete) drei Schubstangen aufweisende Drehdurchführung gesteuert, die zum einen eine hinreichende Rotationsbewegung um die Längsachse L zur Verfügung stellt, die auf den relativ zur Drehdurchführung positionsfest befestigten Werkzeugkopf 10 übertragen wird und die zusätzlich drei individuell steuerbare Schubstangen zur Verfügung stellt, die durch Druckbelastungen auf drei jeweils einer Schubstange zugeordneten Schubkeil 31, 32, 33 diesen steuernd bewegen. Die (nicht eingezeichnete) Drehdurchführung übt im Betrieb gesteuerten Druck individuell auf jeden der drei Schubkeilarme 41, 42, 43 über jeweils eine ebene Kontaktfläche 51, 52, 53 aus. Durch den Druck wird der Schubkeil 31, 32. 33 in Längsrichtung L zum zu bearbeitenden Rohr hin verschoben. Durch Stoppen der Druckbelastung stellt sich der zugeordnete Schubkeil 31, 32, 33 aufgrund einer im Gehäuse 11 vorgesehenen Rückstellfeder 61, 62, 63 automatisch zurück.

Fig. 3 zeigt die drei Schubkeile 31, 32, 33 und drei Supports 21, 22, 23 in ihrer relativen Anordnung zueinander. Die drei Schubkeile 31, 32, 33 sind baugleich ausgebildet und in einem Winkel von 120° versetzt zueinander um die Längsachse L des Werkzeugkopfes 10 angeordnet Jeder Schubkeil 31, 32, 33 weist an dem der Drehdurchführung zugewandeten Ende den zugeordneten Schubkeilarm 41, 42, 43 und an dem Support 21, 22, 23 zugewandten Ende eine abgeschrägte Fläche 71, 72, 73 auf. Die abgeschrägte Fläche 71 weist eine gleichmäßige Steigung gegenüber der Längsachse L auf. In dem radial äußeren Bereich weist jeder der Schubkeile 31, 32, 33 eine Aussparung für die ihm zugeordnete Rückstellfeder 61, 62, 63 auf. Das eine Ende der Rückstellfeder 61, 62, 63 ist mit dem Schubkeil 31, 32, 33 positionsfest verbunden, während das andere Ende der Rückstellfeder 61, 62, 63 positionsfest mit dem Gehäuse 11 in Verbindung steht.

Jeder der Schubkeile 31, 32, 33 weist zwei sich gegenüberliegende in radialer Richtung verlaufenden Außenwandungen auf, die jeweils vollständig mit einem in Längsrichtung verlaufenden Zahnprofil 81, 82, 83 versehen sind. Das Zahnprofil 81, 82, 83 wird mittels eines Drahterodierverfahrens in die Außenwandungen eingebracht. Die senkrecht zur Längsachse L und senkrecht zur Radialrichtung vorgesehene Bauhöhe jeder der Schubkeile 31, 32, 33 ist über die gesamte Längs- und Radialausdehnung des Schubkeiles 31, 33, 33 konstant. Die schräge Kontaktfläche 71, 72, 73 des Schubkeils 31, 32, 33 weist eine konstante Steigung über ihre gesamte Ausdehnung auf. Sie ist in ständigem und gleitendem Kontakt mit einer korrespondierenden schrägen Kontaktfläche 71. 72. 73 des dem Schubkeil 31, 32. 33 zugeordneten Supports 21, 22, 23.

Jeder Support 21, 22, 23 weist gemäß Fig. 4 jeweils eine Befestigungsplatte 91, 92, 93 für ein Schneidwerkzeug auf. Die Schneidwerkzeuge sind nicht eingezeichnet. Die Supports 21, 22, 23 sind genau in Radialrichtung des Werkzeugkopfes 10 hin und her beweglich im Werkzeugkopf 10 angeordnet. Die nach innen gerichtete Radialbewegung des Supports 21, 22, 23 wird durch eine über den Schubkeil 31, 32, 33 auf den Support 21, 22, 23 ausgeübte Druckkraft hervorgerufen, indem der dem Support 21, 22, 23 zugeordnete Schubkeil 31, 32, 33 in das Innere des Gehäuses 10 gedrückt wird. Über die beiden schrägen Kontaktflächen 71, 72, 73 zwischen Schubkeil 31, 32, 33 und zugeordnetem Support 21, 22, 23 wird eine Kraft auf den Schubkeil 31. 32, 33 in Radialrichtung umgelenkt. Im montierten Zustand sind die Befestigungsplatten 91, 92 93 des Supports 21, 22, 23 außerhalb des Gehäuses 11 vorgesehen. Im Innern des Gehäuses 11 weist jeder Support 21, 22, 23 einen in Radialrichtung verlaufenden Supportarm 101, 102, 103 auf. Die drei Supportarme 101, 102, 103 kreuzen sich im Innern des Gehäuses in Blickrichtung entlang der Längsachse L. Jeder Support 21, 22, 23 weist zwei sich gegenüberliegende in radialer Richtung verlaufende seitliche Supportwandungen auf, die senkrecht auf den zugeordneten schrägen Kontaktflächen 71, 71, 73 stehen und entlang des zugeordneten Supportarmes 101, 102, 103 verlaufen und die im Wesentlichen entlang ihrer gesamten Ausdehnung mit einem radial verlaufenden zweiten Zahnprofil 111. 112, 113 versehen sind.

Die senkrecht zur Längsachse L und senkrecht zur Radialrichtung angeordnete Bauhöhe jedes Supports 21, 22, 23 im Gehäuse 11 ist im Wesentlichen über die gesamte Ausdehnung des Supports 21, 22, 23 im Gehäuse 11 konstant.

Die Bauhöhe der Schubkeile 31, 32, 33 ist in Längsrichtung und Radialrichtung überall gleich. An jedem Schubkeil 31, 32, 33 liegen sich erste Zahnprofile 81, 82, 83 gegenüber. Die Bauhöhe der Schubkeile 31, 32, 33 ist um die Zahnprofiltiefe der zweiten Zahnprofile 111, 112, 113 kleiner als die Bauhöhe der Supports 21, 22, 23.

Die Zahnprofile 81, 82, 83, 111, 112, 113 korrespondieren mit zugeordneten, in das Innere des Gehäuses 11 eingelassenen Zahnprofilen.

Das Gehäuse 11 wird aus einem kurzen Vollprofilrohr hergestellt. Die zur Aufnahme der Schubkeile vorgesehenen drei Schubkeilführungen sind in einem Querschnitt senkrecht zur Längsachse L rechteckig ausgebildet, und sie erstrecken sich über die gesamte Länge des Werkzeugkopfes 10 und weisen an ihren radial verlaufenden Innenwandungen ein sich über die gesamte Längsausdehnung erstreckendes korrespondierendes erstes Zahnprofil auf.

Das korrespondierende erste Zahnprofil wird ebenfalls durch Drahterodieren hergestellt.

Das Gehäuse 11 weist darüber hinaus drei radiale Supportführungen für die drei Supports 21, 22, 23 auf. Die drei Supportführungen sind in radialer Richtung R1, R2, R3 vollständig durch das Gehäuse 11 geführt und weisen an ihren in radialer Richtung verlaufenden Innenwandungen ebenfalls durch Drahterodieren herstellbare zweite Zahnprofile auf. Die Breite der Supportführung ist etwas größer als die Breite der Schubkeilführung, so dass der in Längsrichtung L bewegliche Schubkeil 31, 32, 33 während des Betriebs ein Stück weit in die Führung des Supports 21, 22, 23 eindringen kann.

Die drei Supportführungen sind an ihren zylindrischen Außenseiten mit jeweils zwei Verschlussplatten 121, 122, 123, 131, 132, 133 abgedeckt wie Fig. 5 zeigt. Die Länge jedes Supportarmes 101, 102, 103 ist so bemessen, dass jeder Support 21, 22, 23 in der Supportführung in Radialrichtung R1, R2, R3 etwa 10mm hin und her verschiebbar ist, bevor das Ende des Supportarmes 101, 102, 103 gegen die aufgeschraubte Verschlussplatte 131, 132, 133 stößt. In jedem Supportarm 101, 102, 103 ist in radialer Richtung eine Rückstellfeder 151, 152, 153 eingelassen, die den Support 21, 22, 23 automatisch radial nach außen rückstellt.

Die Anordnung der Verschlussplatten 121, 122, 123, 131, 132, 133 ist in Fig. 5 gezeigt.

Die Schubkeile 31, 32, 33 sind baugleich, während die Supports 21, 22, 23 nicht baugleich ausgebildet sind. Die Ausdehnung der Supports in Längsrichtung L ist gleich. Die radiale Ausdehnung der Supports ist ebenfalls gleich. Jedoch ist die Anordnung der Supportarme 101, 102, 103 relativ zum Support 21, 22, 23 verschieden. Die Supportarme 101, 102, 103 sind in Längsrichtung L versetzt am zugehörigen Support 21, 22, 23 angeordnet und zwar um die Längsausdehnung eines benachbarten Supportarmes 101, 102, 103, so dass die Supportarme 101, 102, 103 sich kreuzend im Gehäuse 11 angeordnet sind und sich ihre Radialbewegungen nicht gegenseitig stören. Dabei bilden die Befestigungsplatten 91, 92, 93 der Supports 21, 22, 23 eine gemeinsame ebene Fläche aus.

Gegenüber dem bekannten Stand der Technik weist der erfindungsgemäße Werkzeugkopf 10 den erheblichen Vorteil auf, dass die drei auf der Befestigungsplatte. 91, 92, 93 montierbaren Werkzeuge 161, 162, 163 während des Betriebs, d. h. der Rotation des Werkzeugkopfes 10, radial verstellbar sind, wie Fig. 6 zeigt. Diese radiale Bewegung kann während des Betriebs zu jedem Zeitpunkt gesteuert werden. Durch den erfindungsgemäßen Werkzeugkopf 10 ist es möglich, zum einen Innen- und Außenfasen am Rohrende 150 vorzusehen, sowie die Stirnseite des Rohrendes 150 zu bearbeiten, dabei können jedoch Rohrenden 150 unterschiedlichen Durchmessers ohne Wechsel der Werkzeuge mit gleicher Fasenlänge ausgebildet werden. Insbesondere ist es jedoch auch möglich, in die Innen- und Außenwandungen der Rohrenden 150 radiale Hinterdrehungen 160 einzubringen, sowie Aussparungen in die Innen- und Außenwandungen insbesondere radialer Natur einzubringen, die unterschiedlichste Profile aufweisen können. Dazu werden die Supports 21, 22, 23 zunächst nach innen verfahren, der Werkzeugkopf 10 dann in das Rohrende 150 hinein verschoben und die Supports 21, 22, 23 dann soweit radial nach außen verfahren, bis die Schneidwerkzeuge 161, 162, 163 die Rohrwandung berühren. In diesem Moment wird die radiale Hinterdrehung 160 in die Wandung des Rohrendes 150 eingebracht.

Üblicherweise weisen Rohrenden 150 eine Exzentrizität auf, d. h. dass die Rohrwandung sich entlang des Umfangs geringfügig ändert. Zur Anbringung einer Innenphase als auch zur Anbringung einer radialen Hinterdrehung 160 konstanter Tiefe entlang des Umfanges des Rohrendes 150 ist ein Stechmeißelwerkzeug 170 gemäß Fig. 7 vorgesehen. Der Stechmeißel 170 weist eine Rolle 171 auf, die um eine Achse in Längsrichtung L rotierbar ist, die von einer der Befestigungsplatten 91, 92, 93 der Supports 21, 22, 23 positionsfest abgeht Auf der dem Support 21, 22, 23 abgewandten Seite der Rolle 171 ist ein Stechmeißel 172 vorgesehen, dessen Spitze radial über die Rolle 171 hinaus absteht. Zur Einbringung einer radialen Hinterdrehung 160 in eine Rohrinnenwandung wird der Werkzeugkopf 10 zunächst mit nach radial innen gestellten Supports 21, 22, 23 in das Innere des Rohrendes 150 hinein eingeführt. Dabei gelangen der Stechmeißel 172 und die Rolle 171 nicht in Kontakt mit der Rohrinnenwandung. Dann wird der zugeordnete Sthubkeil 31, 32. 33 zurückgefahren und das zugeordnete Support 21, 22 23 bewegt sich durch die Kraft der Rückstellfeder 151, 152, 153 radial nach außen. Der Stechmeißel 172 berührt die Rohrinnenwandung und bringt eine radiale Hinterdrehung 160 in die Rohrinnenwandung ein. Die Eindringtiefe des Stechmeißels 172 ist durch den Durchmesser der Rolle 171 entlang des Umfanges des Rohres konstant begrenzt.

Darüber hinaus ist es möglich, mit einem weiteren Werkzeug, das eine Rolle 171 und eine zwischen Rolle 171 und dem Support 21, 22, 23 angeordnete Schneide aufweist in entsprechender Weise, eine Fase entlang des Umfanges des Rohrendes 150 gleicher Länge an der Rahrinnenwandung anzubringen.

### Bezugszeichenliste:

- 10: Werkzeugkopf
- 11: Gehäuse
- 16: Bohrung
- 17: Bohrung
- 18: Bohrung
- 21: Support
- 22: Support
- 23: Support
- 31: Schubkeil
- 32: Schubkeil
- 33: Schubkeil
- 41: Schubkeilarm
- 42: Schubkeilarm
- 43: Schubkeilarm
- 51: Kontaktfläche
- 52: Kontaktfläche
- 53: Kontaktfläche
- 61: Rückstellfeder
- 62: Rückstellfeder
- 63: Rückstellfeder
- 71: Kontaktfläche
- 72: Kontaktfläche
- 73: Kontaktfläche
- 81: Zahnprofil
- 82: Zahnprofil
- 83: Zahnprofil
- 91: Befestigungsplatte
- 92: Befestigungsplatte
- 93: Befestigungsplatte
- 101: Supportarm
- 102: Supportarm
- 103: Supportarm
- 111: Zahnprofil
- 112: Zahnprofil
- 113: Zahnprofil
- 121: Verschlussplatte
- 122: Verschlussplatte
- 123: Verschlussplatte
- 131: Verschlussplatte
- 132: Verschlussplatte
- 133: Verschlussplatte
- 150: Rohrende
- 151: Rückstellfeder
- 152: Rückstellfeder
- 153: Rückstellfeder
- 160: Hinterdrehung
- 161: Schneidwerkzeug
- 162: Schneidwerkzeug
- 163: Schneidwerkzeug
- 170: Stechmeißelwerkzeug
- 171: Rolle
- 172: Stechmeißel
- L: Längsrichtung
- R1: Radialrichtung
- R2: Radialrichtung
- R3: Radialrichtung

## Patentansprüche

1. Werkzeugkopf mit
einem Gehäuse (11), in dem F
wenigstens ein in einer ersten Führung in Längsrichtung (L) beweglicher Schubkeil (31, 32, 33) vorgesehen ist dem jeweils
ein in einer zweiten Fuhrung in einer quer zur Längsrichtung (L) angeordneten Querrichtung (R1, R2, R3) beweglicher Support (21, 22, 23) im Gehäuse (11) zugeordnet ist,
und der Schubkeil (31, 32, 33) und der Support (21, 22, 23) über eine schräge Kontaktfläche (51, 52, 53) miteinander gleitend in Berührung stehen und eine Bewegung des Schubkeils (31, 32, 33) in Längsrichtung (L) über die schräge Kontaktfläche (51, 52, 53) eine Querbewegung des zugeordneten Supports (21, 22, 23) bewirkt und
am Support (21, 22, 23) ein Schneidwerkzeug (161, 162, 163) befestigbar ist **dadurch gekennzeichnet, dass** die erste und zweite Führung jeweils eine zahnführung ist und der Support (21, 22, 23) einen in Querrichtung (R1, R2, R3) verlaufenden Supportarm (101, 102, 103) aufweist.

2. Werkzeugkopf nach Anspruch 1,
**dadurch gekennzeichnet, dass** das Gehäuse (11) in einem Querschnitt im Wesentlichen kreisförmig ausgebildet ist und eine Mehrzahl von Supports (21, 22, 23) in einem Querschnitt senkrecht zur Längsrichtung (L) sternförmig angeordnet sind und die Supportarme (101, 102, 103) in einer Ansicht in Längsrichtung (L) Kreuzend angeordnet sind.

3. Werkzeugkopf nach Anspruch 2,
**dadurch gekennzeichnet, dass** genau drei Supports (21, 22, 23) vorgesehen sind.

4. Werkzeugkopf nach Anspruch 1,
**dadurch gekennzeichnet, dass** der wenigstens eine Schubkeil (31, 32, 33) an einander gegenüberliegenden, radial verlaufenden Außenwandungen ein erstes äußeres Zahnprofil (81, 82, 83) aufweist, das mit einem ersten inneren Zahnprofil an einer Innenwandung einer Schubkeilführung des Gehäuses (11) der ersten Zahnführung zusammenwirkt.

5. Werkzeugkopf nach Anspruch 1,
**dadurch gekennzeichnet, dass** der wenigstens eine Support (21, 22, 23) an einander gegenuberllegenden, radial verlaufenden Wandungen ein zweites äußeres Zahnprofil (111, 112, 113) aufweist, das mit einem zweiten inneren Zahnprofil an einer Innenwandung einer supportführung des Gehäuses (11) zusammenwirkt

6. Werkzeugkopf nach wenigstens einem der Ansprüche 2 bis 5,
**dadurch gekennzeichnet, dass** die Schubkeile (31, 32, 33) baugleich sind.

7. Werkzeugkopf nach wenigstens einem der vorstehenden Ansprüche,
**dadurch gekennzeichnet, dass** der im Gehäuse (11) vorgesehene Teil des wenigstens einen Supports (21, 22, 23) eine konstante Bauhöhe aufweist.

8. Werkzeugkopf nach Anspruch 1,
**dadurch gekennzeichnet, dass** die Bauhöhe des Schubkells (31, 32, 33) um die Tiefs des zweiten Zahnprofils (111, 112, 113) kürzer ist, als die Bauhöhe des zugehörigen Supports (21, 22. 23).

9. Werkzeugkopf nach wenigstens einem der vorstehenden Ansprüche,
**dadurch gekennzeichnet dass** dem wenigstens einen Schubkeil (31, 32, 33) und /oder dem wenigstens einen Support (21, 22, 23) jeweils eine Rückstellfeder (61, 62, 63, 151, 152, 153) zugeordnet ist.

10. Werkzeugkopf nach wenigstens einem der vorstehenden Ansprüche,
**dadurch gekennzeichnet, dass** an einem Supports (21, 22, 23) ein Stechmeißetwerkzeug (170) mit einer um eine in Längsrichtung angeordnete Achse drehbaren Rolle (171) vorgesehen ist und an der dem Support (21, 22, 23) abgewandten Seite an der Rolle (171) ein Stechmeißel (172) angeordnet ist, dessen Spitze radial über den Durchmesser der Rolle (171) hinaus abeteht

11. Maschine zur Bearbeitung der Enden eines stangenförmigen Profilmaterials mit einem Werkzeugkopf (10) nach wenigstens einem der vorstehenden Ansprüche.

12. Maschine nach Anspruch 11,
**dadurch gekennzeichnet, dass** der Werkzeugkopf (10) auf eine Drehdurchführung montiert ist.

13. Verfahren zur Durchführung auf einer Maschine nach einem der Ansprüche 11 oder 12 zur Bearbeitung von Enden eines stangenförmigen Profilmaterials (150),
indem eine radiale Hinterdrehung (160) in eine Wandung des Profilmaterials (150) eingebracht wird.

14. Verfahren nach Anspruch 13,
**dadurch gekennzeichnet, dass** der wenigstens eine Support (21, 22, 23) zur Bearbeitung einer Außenwandung des Profilmaterials zunächst nach radial außen oder zur Bearbeitung einer innenwandung des Profilmaterials zunächst nach radial innen verfahren wird.

15. Verfahren nach Anspruch 13 oder 14,
indern ein Schneidwerkzeug (161, 162, 163) in Längsrichtung des Profilmaterials (150) berührungsfrei hinter eine Stirnfläche des Profilmaterials (150) geführt wird,
das Schneidwerkzeug (161, 162, 163) relativ zum Profilmaterial (150) um eine in Längsrichtung ausgerichtete Längsachse rotiert wird und das Schneidwerkzeug (161. 162, 163) während der Rotation radial zur Wandung hin verstellt wird, bis die Wandung vom Schneidwerkzeug (161, 162, 163) berührt wird und durch die Berührung eine Hinterdrehung (160) in die Wandung eingebracht wird.

## Claims

1. Tool head with
a housing (11), in which
at least one thrusting wedge (31, 32, 33) is provided, able to move back and forth in the longitudinal direction (L) in a first guide, which
is coordinated with a support (21, 22, 23) in the housing (11), able to move in a second guide in a transverse direction (R1, R2, R3) transversely to the longitudinal direction.(L), and the thrusting wedge (31, 32, 33) and the support (21, 22, 23) are in sliding contact with each other via a slanted contact surface (51, 52, 53) and a movement of the thrusting wedge (31, 32, 33) in the longitudinal direction (L) brings about a transverse movement of the coordinated support (21, 22, 23) via the slanted contact surface (51, 52, 53) and
a cutting tool (161, 162, 163) can be fastened on the support (21, 22, 23), **characterized in that** the first and the second guide, each of them is a tooth guide and the support (21, 22, 23) has a support arm (101, 102, 103) extending in the transverse direction (R1, R2, R3).

2. Tool head per claim 1,
**characterized in that**
the housing (11) is fashioned essentially in circular shape in one cross section and a plurality of supports (21, 22, 23) is provided in the shape of a star in one cross section perpendicular to the lengthwise direction (L) and the support arms (101, 102, 103) are arranged in crossing manner, looking at them in the lengthwise direction (L).

3. Tool head per claim 2,
**characterized in that**
precisely three supports (21, 22, 23) are provided.

4. Tool head per claim 1,
**characterized in that**
the at least one thrusting wedge (31, 32, 33) has a first outer tooth profile (81, 82, 83) on opposite, radially extending outer walls, interacting with a first inner tooth profile on an inner wall of a thrusting wedge guide of the housing (11) of the first toothed guide.

5. Tool head per claim 1,
**characterized in that**
the at least one support (21, 22, 23) has a second outer tooth profile (111, 112, 113) on opposite, radially extending walls, interacting with a second inner tooth profile on an inner wall of a support guide of the housing (11).

6. Tool head according to at least one of the claims 2 - 5,
**characterized in that**
the thrusting wedges (31, 32, 33) are identical in construction.

7. Tool head according to at least one of the preceding claims,
**characterized in that**
the part of the at least one support (21, 22, 23) provided in the housing (11) has a constant design height.

8. Tool head per claim 1,
**characterized in that**
the design height of the thrusting wedge (31, 32, 33) is less than the design height of the corresponding support (21, 22, 23) by the depth of the second tooth profile (111, 112, 113).

9. Tool head according to at least one of the preceding claims,
**characterized in that**
the at least one thrusting wedge (31, 32, 33) and/or the at least one support (21, 22, 23) are each coordinated with a return spring (61, 62, 63, 151, 152, 153).

10. Tool head according to at least one of the preceding claims,
**characterized in that**
a necking tool (170) is provided on one support (21, 22, 23) with a roller (171) which can turn about an axis arranged in a lengthwise direction and a bench chisel (172) is arranged on the roller (171) at the side away from the support (21, 22, 23), whose tip projects radially beyond the diameter of the roller (171).

11. Machine for machining of the ends of a rodlike profile material with a tool head (10) according to at least one of the preceding claims.

12. Machine per claim 11,
**characterized in that**
the tool head (10) is mounted on a rotary transmission leadthrough.

13. Method to be implemented on a machine according to claim 11 or 12, machining the ends of a rodlike profile material (150), in that a radial relief turning (160) is produced in one wall of the profile material (150).

14. Method per claim 13,
**characterized in that**
the at least one support (21, 22, 23) for the machining of an outer wall of the profile material is at first moved radially outward or that for the machining of an inner wall of the profile material is at first moved radially inward.

15. Method per claim 13 or 14,
wherein a cutting tool (161, 162, 163) is led up in the lengthwise direction of the profile material (150) behind one end face of the profile material (150) without contacting it, the cutting tool (161, 162, 163) is rotated relative to the profile material (150) about a lengthwise axis oriented in the longitudinal direction and the cutting tool (161, 162, 163) is moved radially toward the wall during the rotation until the wall is contacted by the cutting tool (161, 162, 163), and a relief turning (160) is made in the wall by the contacting.

## Revendications

1. Téte d'outil,
comprenant un carter (11),
dans lequel il est prévu au moins une clavette coulissante (31, 32, 33) pouvant se déplacer dans une première glissière, dans le sens longitudinal (L), et à laquelle est associé respectivement
dans le carter (11), un support (21, 22, 23) pouvant se déplacer dans une deuxième glissière, dans un sens transversal (R1, R2, R3) disposé perpendiculairement au sens longitudinal (L),
et dans lequel la clavette coulissante (31, 32, 33) et le support (21, 22, 23) sont en contact réciproque coulissant par l'intermédiaire d'une surface de contact (51, 52, 53) oblique, et un mouvement de la clavette coulissante (31, 32, 33) dans le sens longitudinal (L) provoque un mouvement transversal du support (21, 22, 23) associé, par l'intermédiaire de la surface de contact (51, 52, 53) oblique, et
un outil de coupe (161, 162, 163) peut être fixé au support (21, 22, 23), **caractérisée par le fait que** les première et deuxième glissières sont chacune une glissière dentée,
et le support (21, 22, 23) présente un bras de support (1D1, 102, 103) s'étendant dans le sens transversal (R1, R2, R3).

2. Tête d'outil selon la revendication 1, **caractérisée par le fait que** le carter (11) est réalisé avec une section transversale sensiblement circulaire, et une pluralité de supports (21, 22, 23) sont disposés en forme d'étoile dans une section perpendiculaire au sens longitudinal (L), et les bras de support (101, 102, 103), en projection, sont disposés de manière à se croiser.

3. Tète d'outil selon la revendication 2, **caractérisée par le fait qu'**il est prévu exactement trois supports (21, 22, 23).

4. Tête d'outil selon la revendication 1, **caractérisée par le fait que** la clavette coulissante (31, 32, 33), au nombre d'au moins une, présente, sur des parois extérieures mutuellement en vis-à-vis et s'étendant dans le sens radial, un premier profil denté (81, 82, 83) extérieur qui coopère avec un premier profil denté intérieur sur une paroi intérieure d'une glissière de clavette coulissante du carter (11) de la première glissière dentée.

5. Tête d'outil selon la revendication 1, **caractérisée par le fait que** le support (21, 22, 23), au nombre d'au moins un, présente, sur des parois mutuellement en vis-à-vis et s'étendant dans le sens radial, un deuxième profil denté (111, 112, 113) extérieur qui coopère avec un deuxième profil denté intérieur sur une paroi intérieure d'une glissière de support du carter (11).

6. Tête d'outil selon au moins une des revendications 2 à 5, **caractérisée par le fait que** les clavettes coulissantes (31, 32, 33) sont de construction identique.

7. Tête d'outil selon au moins une des revendications précédentes, **caractérisée par le fait que** la partie du support (21, 22, 23), au nombre d'au moins un, prévue dans le carter (11) présente une hauteur constante.

8. Tête d'outil selon la revendication 1, **caractérisée par le fait que** la hauteur de la clavette coulissante (31, 32, 33) est inférieure à la hauteur du support (21, 22, 23) associé, de la valeur de la profondeur du deuxième profil denté (111, 112, 113).

9. Tête d'outil selon au moins une des revendications précédentes, **caractérisée par le fait qu'**est associé à la clavette coulissante (31, 32, 33), au nombre d'au moins une, et/ou au support (21, 22, 23), au nombre d'au moins un, respectivement un ressor de rappel (61, 62, 63, 151, 152, 153).

10. Tête d'outil selon au moins une des revendications précédentes, **caractérisée par le fait qu'**il est prévu sur un support (21, 22, 23), un porte-outil à tronçonner (170), doté d'un galet (171) tournant autour d'un axe disposé dans le sens longitudinal, et, sur le côté opposé au support (21, 22, 23), un outil à tronçonner (172) est disposé sur le galet (171), outil dont la pointe dépasse radialement par rapport au diamètre du galet (171).

11. Machine pour usiner les extrémités d'un matériau profilé en forme de barres, comprenant une tête d'outil (10) selon au moins une des revendications précédents

12. Machine selon la revendication 11, **caractérisée par le fait que** la tête d'outil (10) est montée sur un dispositif passe-fil.

13. Procédé destiné à être mis en oeuvre sur une machine selon une des revendications 11 ou 12, pour l'usinage des extrémités d'un matériau profilé (150) en forme de barre, en réalisant une dépouille (160) radiale dans une paroi du matériau profité (150).

14. Procédé selon la revendication 13, **caractérisé par le fait que** pour l'usinage d'une paroi extérieure du matériau profilé, le support (21, 22, 23), au nombre d'au moins un, est d'abord déplacé radialement vers l'extérieur ou, pour l'usinage d'une paroi intérieure du matériau profilé, est d'abord déplacé radialement vers l'intérieur.

15. Procédé selon la revendication 13 ou 14, selon lequel un outil de coupe (161, 162 163) est amené, dans le sens longitudinal du matériau profilé (150), sans contact derrière une face frontale du matériau profilé (150), l'outil de coupe (161, 162, 163) est tourné par rapport au matériau profilé (150), autour d'un axe longitudinal orienté dans le sens longitudinal, et, pendant la rotation, l'outil de coupe (161, 162, 163) est déplacé radialement en direction de la paroi, jusqu'à ce que la paroi entre en contact avec l'outil de coupe (161, 162, 163) et ce contact a pour effet de ménager une dépouille (160) dans la paroi.
